# EUROPEAN PATENT SPECIFICATION

(11) **EP 4 261 936 B1**
(45) Date of publication and mention of the grant of the patent: **14.05.2025**
(21) Application number: 22746270.2
(22) Date of filing: 27.01.2022
(51) Int. Cl.: H01M 4/134, H01M 4/36, H01M 4/38, H01M 4/587, H01M 4/62, H01M 10/052, H01M 4/02, H01M 4/48, H01M 4/133, H01M 10/0525

(54) **NEGATIVE ELECTRODE AND SECONDARY BATTERY INCLUDING THE SAME**
NEGATIVELEKTRODE UND SEKUNDÄRBATTERIE DAMIT
ÉLECTRODE NÉGATIVE ET BATTERIE SECONDAIRE LA COMPRENANT

(30) Priority: 29.01.2021 KR 20210013020
(43) Date of publication of application: 18.10.2023
(73) Proprietor: LG Energy Solution, Ltd., Seoul 07335 (KR)
(72) Inventor: KIM, Young Jae, Daejeon 34122 (KR); CHAE, Jong Hyun, Daejeon 34122 (KR); JUN, Chan Soo, Daejeon 34122 (KR)
(74) Representative: Hoffmann Eitle
(86) International application number: PCT/KR2022/001532
(87) International publication number: WO 2022/164244

(56) References cited:
- CN-A- 108 878 855
- CN-A- 110 600 704
- JP-A- 2015 510 666
- KR-A- 20070 027 438
- KR-A- 20200 089 568
- KR-B1- 101 708 359
- KR-B1- 102 060 170
- US-A1- 2020 243 848
- US-B2- 10 297 856

## Description

### TECHNICAL FIELD

### Cross-reference to Related Applications

This application claims the benefit of Korean Patent Application No. 10-2021-0013020,

### Technical Field

The present invention relates to a negative electrode and a secondary battery including the same.

### BACKGROUND ART

Recently, the demand for a small and lightweight secondary battery having a relatively high capacity is rapidly increased due to the rapid spread of electronic devices using batteries, such as cell phones, notebook computers, electric vehicles, and the like. Particularly, a lithium secondary battery is lightweight and has a high energy density, and thus, is attracting attention as a driving power source for portable devices. Therefore, research and development efforts for improving the performance of a lithium secondary battery have been actively conducted.

Typically, a lithium secondary battery includes a positive electrode, a negative electrode, a separator interposed between the positive electrode and the negative electrode, an electrolyte, an organic solvent, and the like. In addition, a positive electrode and a negative electrode may have an active material layer including a positive electrode active material or a negative electrode active material on a current collector. In the positive electrode, a lithium-containing metal oxide such as LiCoO₂, and LiMn₂O₄ is used as a positive electrode active material, and accordingly, in the negative electrode, a carbon-based active material or a silicon-based active material not containing lithium is used as a negative electrode active material.

Among negative electrode active materials, a silicon-based active material has been attracted attention in that it has a capacity of about 10 times higher than that of a carbon-based active material, and has excellent high-speed charging properties. However, a silicon-based active material has a large degree of volume expansion/contraction according to charging and discharging, and as charging and discharging are repeated, an electrical short circuit between active materials is likely to occur, so that there is a problem in that the lifespan properties of a negative electrode are degraded. In this regard, a negative electrode has been developed in which a silicon-based active material is used together with a binder including styrene butadien rubber and carboxymethyl cellulose, but such a binder does not have high tensile strength, and thus, has a problem of not being able to sufficiently suppress the volume expansion of the silicon-based active material. Meanwhile, a negative electrode has been developed in which a silicon-based active material is used together with a binder such as polyvinyl alcohol, polyacrylic acid, and the like having high tensile strength, but the binder such as polyvinyl alcohol, polyacrylic acid, and the like has poor wetting, and accordingly, has a problem of degrading the conductivity and increasing the resistance of the active material, thereby reducing the output properties of the negative electrode.

Korean Patent Registration No. 10-0794192 relates to a method for manufacturing a carbon-coated silicon-graphite composite negative electrode material for a lithium secondary battery and a method for manufacturing a secondary battery including the carbon-coated silicon-graphite composite negative electrode material, but has a limit in solving the above-mentioned problems.

### [Prior Art Document]

### [Patent Document]

Korean Patent Registration No. 10-0794192

### DISCLOSURE OF THE INVENTION

### TECHNICAL PROBLEM

An aspect of the present invention provides a negative electrode in which lifespan properties and output properties are simultaneously improved.

Another aspect of the present invention provides a secondary battery including the negative electrode described above.

### TECHNICAL SOLUTION

According to an aspect of the present invention, there is provided a negative electrode including a negative electrode current collector, and a negative electrode active material layer disposed on the negative electrode current collector, wherein the negative electrode active material layer includes a silicon-based active material, a first conductive material including graphite, a second conductive material including a single-walled carbon nanotube, and a binder, wherein the binder includes a cellulose-based compound and a rubber-based compound, the first conductive material is included in the negative electrode active material layer in an amount of 15 wt% to 25 wt%, the second conductive material is included in the negative electrode active material layer in an amount of 0.15 wt% to 2.5 wt%, and the second conductive material and the binder are included in the negative electrode active material layer at a weight ratio of 1.5:99.5 to 20.0:80.0.

According to another aspect of the present invention, there is provided a secondary battery including the negative electrode described above, a positive electrode opposing the negative electrode, a separator interposed between the negative electrode and the positive electrode, and an electrolyte.

### ADVANTAGEOUS EFFECTS

In a negative electrode using a silicon-based active material, the negative electrode of the present invention is characterized by using a first conductive material containing graphite, a second conductive material including a single-walled carbon nanotube, and a binder containing a cellulose-based compound and a rubber-based compound, wherein the first conductive material, the second conductive material, and the binder are included in specific contents. According to the present invention, the output properties of a negative electrode may be improved by using a binder having excellent electrolyte solution wetting, and at the same time, since the second conductive material may be bonded to the binder to improve the tensile strength of the binder, the volume expansion and contraction of a silicon-based active material may be suppressed, and since the first conductive material may be present between silicon-based active materials, a conductive network may be maintained. Therefore, the negative electrode and a secondary battery including the same may have lifespan properties and output properties both improved to an excellent level.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, an average particle diameter (D₅₀) may be defined as a particle diameter corresponding to 50% of the volume accumulation in a particle diameter distribution curve of a particle. The average particle diameter (D₅₀) may be measured by, for example, a laser diffraction method. The laser diffraction method generally enables measurement of a particle diameter from a sub-micron region to several millimeters, so that results of high reproducibility and high resolution may be obtained.

### <Negative electrode>

The present invention relates to a negative electrode, and more specifically, to a negative electrode for a lithium secondary battery.

Specifically, the negative electrode of the present invention includes a negative electrode current collector, and a negative electrode active material layer disposed on the negative electrode current collector, wherein the negative electrode active material layer includes a silicon-based active material, a first conductive material including graphite, a second conductive material including a single-walled carbon nanotube, and a binder, wherein the binder includes a cellulose-based compound and a rubber-based compound, the first conductive material is included in the negative electrode active material layer in an amount of 15 wt% to 25 wt%, the second conductive material is included in the negative electrode active material layer in an amount of 0.15 wt% to 2.5 wt%, and the second conductive material and the binder are included in the negative electrode active material layer at a weight ratio of 1.5:99.5 to 20.0:80.0.

Typically, a silicon-based active material has an advantage of having a high capacity and fast charging properties, but the silicon-based active material has a large degree of volume expansion/contraction according to charging and discharging, so that there are problems in that active materials in a negative electrode are disconnected from each other as charging and discharging continue, and accordingly, lithium transfer between the active materials becomes difficult, and lithium is precipitated, so that there is a problem in that the lifespan properties are rapidly reduced.

In order to solve the above problem, in a negative electrode using a silicon-based active material, the negative electrode of the present invention is characterized by using a first conductive material containing graphite, a second conductive material including a single-walled carbon nanotube, and a binder containing a cellulose-based compound and a rubber-based compound, wherein the first conductive material, the second conductive material, and the binder are included in specific contents. According to the present invention, the output properties of a negative electrode may be improved by using a binder having excellent electrolyte solution wetting, and at the same time, since the second conductive material may be bonded to the binder to improve the tensile strength of the binder, the volume expansion and contraction of a silicon-based active material may be suppressed, and since the first conductive material may be present between silicon-based active materials, a conductive network may be maintained. Therefore, the negative electrode and a secondary battery including the same may have lifespan properties and output properties both improved to an excellent level.

The negative electrode current collector may include at least one selected from the group consisting of copper, stainless steel, aluminum, nickel, titanium, fired carbon, and an aluminum-cadmium alloy, and preferably, may include copper.

The thickness of the negative electrode current collector may typically be 3 µm to 500 µm, preferably 5 µm to 30 µm.

The negative electrode current collector may have microscopic irregularities formed on the surface thereof to improve the adhesion of the negative electrode active material. For example, the negative electrode current collector may be used in various forms such as a film, a sheet, a foil, a net, a porous body, a foam, and a non-woven body.

The negative electrode active material layer is disposed on the negative electrode current collector. Specifically, the negative electrode active material layer may be disposed on at least one surface of the negative electrode current collector, and specifically, may be disposed on one surface or both surfaces of the negative electrode current collector.

The negative electrode active material layer includes a silicon-based active material, a first conductive material, a second conductive material, and a binder.

The silicon-based active material may include a compound represented by Formula 1 below.

[Formula 1] SiOₓ

In Formula 1 above, 0≤x<2. Since SiO₂ does not react with lithium ions, thereby not being able to store lithium, it is preferable that x is in the above range.

Specifically, the silicon-based active material may include Si. Typically, Si is advantageous in that the capacity thereof is about 2.5 to 3 times higher than that of a silicon oxide (e.g., SiOₓ (0<x<2)). However, the volume expansion/contraction according to the charging and discharging of Si is much larger than that of a silicon oxide, so that it is not easy to commercialize Si. However, in the case of the secondary battery of the present invention, even if a silicon-based active material containing Si is used, it is possible to lower the charging potential of the active material to a desired level, so that the high capacity and fast charging properties of the silicon-based active material may be improved while preventing lifespan properties degradation. Specifically, the silicon-based active material may be mostly composed of Si, and more specifically, the silicon-based active material may be composed of Si.

The average particle diameter (D₅₀) of the silicon-based active material may be 1 µm to 10 µm, preferably 2 µm to 6 µm, in terms of ensuring the structural stability of the active material during charging and discharging, more smoothly forming a conductive network to maintain electrical conductivity, or making it easier to access the binder for binding the active material and the current collector.

The silicon-based active material may be included in the negative electrode active material layer in an amount of 60 wt% to 78 wt%, preferably 65 wt% to 75 wt%. When in the above range, it is possible to sufficiently implement the high capacity of the silicon-based active material in a secondary battery, while minimizing the influence of the volume expansion/contraction of the silicon-based active material on the battery.

The negative electrode active material layer includes a first conductive material including graphite, and a second conductive material including a single-walled carbon nanotube.

In the negative electrode of the present invention, the first conductive material includes graphite, and may continuously maintain a conductive network between active materials even if the active materials expand/contract in volume due to charging and discharging, and the second conductive material includes a single-walled carbon nanotube, and has a large specific surface area to be adsorbed well on the surface of an active material, and thus, may improve the conductivity of the silicon-based active material.

In addition, in the case of the second conductive material, the single-walled carbon nanotube is bonded to a binder in the negative electrode, so that the tensile strength of the binder may be improved. Therefore, when the binder, the first conductive material, and the second conductive material of the present invention are used, the output properties of the negative electrode are improved due to the binder having excellent electrolyte solution wetting, and at the same time, the binder having excellent tensile strength may be implemented, so that it is possible to control the volume expansion and contraction of the silicon-based active material to an excellent level. Therefore, the output properties and lifespan properties of the negative electrode including the conductive material and the binder of the present invention may be simultaneously improved.

The specific surface area of the first conductive material may be 5 m²/g to 40 m²/g, preferably 7 m²/g to 30 m²/g, and more preferably 10 m²/g to 20 m²/g. When the specific surface area of the first conductive material satisfies the above range, the viscosity of a negative electrode slurry for manufacturing a negative electrode is prevented from being excessively increased, and the dispersibility of the first conductive material may be improved, which is preferable, and accordingly, the first conductive material may be uniformly disposed between active materials to improve the effect of maintaining a conductive network.

The specific surface area of the first conductive material may be defined as a value (BET specific surface area) measured by a nitrogen adsorption method.

The first conductive material includes graphite, and specifically, may include at least one selected from artificial graphite and natural graphite.

The graphite may be plate-shaped. When the graphite is plate-shaped, the graphite has excellent contact with active materials when disposed between the active materials, so that the effect of maintaining a conductive network between the active materials may be more smoothly exerted. More specifically, the first conductive material may include a plate-shaped graphite.

The aspect ratio of the first conductive material may be 1.1 to 30.0, preferably 1.2 to 6.0. When the first conductive material has an aspect ratio in the above range, the shape of the first conductive material may be maintained well even if the silicon-based active material expands/contracts in volume, so that a conductive network between the silicon-based active materials may be more preferably maintained. In the present specification, the aspect ratio of the first conductive material may be defined as "long axis length of the first conductive material / short axis length of the first conductive material."

The average particle diameter (D₅₀) of the first conductive material may be 1 µm to 20 µm, preferably 2 µm to 10 µm. When the average particle diameter (D₅₀) of the first conductive material is in the above range, a conductive network between active materials may be easily maintained even if the silicon-based active material expands/contracts in volume, so that the lifespan performance of the negative electrode may be improved.

The ratio of the average particle diameter (D₅₀) of the silicon-based active material and the average particle diameter (D₅₀) of the first conductive material may be 1:1 to 1:5, preferably 1:1 to 1:2. When in the above range, even if the distance between active materials increases due to the volume expansion/contraction of the silicon-based active material in the negative electrode, the first conductive material may maintain a conductive network between the active materials, which is preferable.

The first conductive material is included in the negative electrode active material layer in an amount of 15 wt% to 25 wt%. In the negative electrode active material layer, when the first conductive material is used in an amount of less than 15 wt%, it is difficult for a conductive network to form sufficiently between the silicon-based active materials. In addition, when the first conductive material is used in an amount of greater than 25 wt%, the effect of maintaining a conductive network is improved, but since the amount of the first conductive material, which is a conductive material having a small specific surface area, is increased, the improvement in the overall conductivity in the negative electrode is insignificant, and the amount of active materials in the negative electrode is decreased, which is not preferable in terms of securing capacity.

The first conductive material may be included in the negative electrode active material layer preferably in an amount of 17.5 wt% to 23.0 wt%, and when in the above range, a conductive network between the silicon-based active materials may be maintained despite continuous charging and discharging, so that lifespan properties may be further improved, and at the same time, the excellent fast charging performance of the silicon-based active material may be more easily secured.

The second conductive material has excellent conductivity and has excellent adsorption to the silicon-based active material, and thus, may improve the conductivity of the surface of the silicon-based active material. In addition, the second conductive material may be bonded to the binder to improve the tensile strength of the binder, so that it is possible to control the volume expansion and contraction of the silicon-based active material.

The second conductive material includes a single-walled carbon nanotube (SWCNT). Specifically, the second conductive material may include a single-walled carbon nanotube aggregate formed by the aggregation of two or more single-walled carbon nanotubes.

The specific surface area of the second conductive material may be 400 m²/g to 1,500 m²/g, preferably 600 m²/g to 1,200 m²/g. When the specific surface area of the second conductive material satisfies the above range, the second conductive material may be adsorbed well on the surface of the silicon-based active material, so the conductivity of the surface of the silicon-based active material may be imparted to an excellent level.

The specific surface area of the second conductive material may be defined as a value (BET specific surface area) measured by a nitrogen adsorption method.

The diameter of the second conductive material may be 0.1 nm to 20 nm, preferably 1 nm to 5 nm, and when in the above range, the second conductive material may be stably adsorbed on the surface of the silicon-based active material, which is preferable.

In the present specification, the diameter of the second conductive material is measured by the following method. A solution (the solid content is 1 wt% based on the total weight of the solution) in which the second conductive material and carboxymethyl cellulose (CMC) are added to water at a weight ratio of 40:60 is diluted 1,000 times in water. 1 drop of the diluted solution is dropped on a TEM grid, and the TEM grid is dried. The dried TEM grid is observed with TEM equipment (product name: H7650, manufacturer: Hitachi) to measure the average diameter of the second conductive material.

The second conductive material may be 1 µm to 50 µm, preferably 5 µm to 20 µm in length, and when in the above range, the second conductive material may be smoothly adsorbed on the surface of the active material or the contact thereof may be improved due to the long fiber length of the second conductive material.

In the present specification, the length of the second conductive material is measured by the following method. A solution (the solid content is 1 wt% based on the total weight of the solution) in which the second conductive material and carboxymethyl cellulose are added to water at a weight ratio of 40:60 is diluted 1,000 times in water. Thereafter, 20 ml of the diluted solution is filtered through a filter, and the filter through which the second conductive material is filtered is dried. 100 photographs of the dried filter are taken with a scanning electron microscope (SEM), and the length of the second conductive material is measured using the imageJ program, and then the average value of the lengths may be defined as the length of the second conductive material.

The aspect ratio of the second conductive material may be 5,000 to 15,000, preferably 6,000 to 12,000. When in the above range, it is preferable in that a conductive network by the second conductive material may be stably maintained without being damaged by the roll-pressing of an electrode or the volume expansion of a negative electrode active material, and in that the second conductive material may be attached smoothly to the surface of the silicon-based active material. The aspect ratio of the second conductive material may be defined as "length of the second conductive material / diameter of the second conductive material."

The second conductive material is included in the negative electrode active material layer in an amount of 0.15 wt% to 2.5 wt%. If the second conductive material is included in the negative electrode active material layer in an amount of less than 0.15 wt%, the second conductive material is used too little to secure the conductivity of the surface of the silicon-based active material, thereby degrading the conductivity of active materials, and since the content of the second conductive material bonded to the binder is low, the tensile strength of the binder may not be sufficiently improved, so that the lifespan properties of the negative electrode may be rapidly degraded. In addition, the second conductive material may contribute to the formation of a conductive network between silicon-based active materials as well as on the surface of the silicon-based active material, and when the content of the second conductive material is too low, it is difficult to expect the effect.

In addition, if the second conductive material is included in the negative electrode active material layer in an amount of greater than 2.5 wt%, the second conductive material is used too much to be easily dispersed when manufacturing the negative electrode, and is agglomerated, so that it is difficult to secure the conductivity of the silicon-based active material, and it is difficult to uniformly distribute the second conductive material, which may cause a problem of increasing resistance locally, and the conductivity of the surface of the silicon-based active material may be degraded, and due to a large specific surface area of the second conductive material itself, problems such as a side reaction of an electrolyte solution, gas generation caused thereby, and the like may occur, so that the lifespan properties of the negative electrode may be degraded.

The second conductive material may be included in the negative electrode active material layer preferably in an amount of 0.17 wt% to 2.0 wt%. When in the above range, the conductivity of the surface of the silicon-based active material may be improved, and at the same time, the dispersibility of the second conductive material may be improved when manufacturing the negative electrode to uniformly distribute the second conductive material at a uniform level in the negative electrode, so that the lifespan properties of the negative electrode are further improved, and the excellent fast charging performance of the silicon-based active material may be more easily exerted.

The first conductive material and the second conductive material may be included in the negative electrode active material layer at a weight ratio of 0.7:99.3 to 1.5:99.5, preferably 0.8:99.2 to 1.2:99.8. When in the above range, the conductivity of the surface of the silicon-based active material may be improved, and at the same time, a conductive network between the silicon-based active materials may be maintained despite continuous charging and discharging, so that lifespan properties may be further improved, and at the same time, the excellent fast charging performance of the silicon-based active material may be more easily secured.

The binder is a component for assisting in binding of an active material, a conductive material, and the like, and binding to a current collector.

The binder includes a cellulose-based compound and a rubber-based compound. The binder includes a cellulose-based compound and a rubber-based compound, and thus, has improved electrolyte solution wetting. A binder including a cellulose-based compound and a rubber-based compound has a disadvantage of having lower tensile strength than a binder such as polyacrylic acid and polyvinyl alcohol, but when used together with the second conductive material described above, the second conductive material may be bonded to the binder to improve the tensile strength of the binder, and accordingly, the volume expansion and contraction of a silicon-based active material may be suppressed.

The cellulose-based compound may include at least one selected from the group consisting of carboxy methyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum, and preferably, may include carboxy methyl cellulose in terms of good dispersion force and thickening properties.

The weight average molecular weight of the cellulose-based compound may be 700,000 to 2,000,000, preferably 1,000,000 to 1,500,000 in terms of further improving dispersion force and thickening properties.

The rubber-based compound may include at least one selected from the group consisting of styrene butadiene rubber (SBR), acrylic rubber, butyl rubber, and fluoro rubber, and preferably, may include styrene butadiene rubber in terms of having excellent electrolyte solution wetting and excellent adhesion.

The binder may include the cellulose-based compound and the rubber-based compound at a weight ratio of 5:95 to 80:20, preferably 15:85 to 50:50, and when in the above range, it is preferable in that electrolyte solution wetting is further improved, and the effect of improving tensile strength by using the above-described second conductive material together may be implemented at an excellent level.

In the negative electrode of the present invention, the second conductive material and the binder are included in the negative electrode active material layer at a weight ratio of 1.5:99.5 to 20.0:80.0. If the amount of the second conductive material is less than 1.5 wt% and the amount of the binder is greater than 99.5 wt% based on the sum of the weights of the second conductive material and the binder, the effect of improving the tensile strength of the binder by the second conductive material is insignificant, so that it is difficult to smoothly control the volume expansion and contraction of the silicone-based active material. If the amount of the second conductive material is greater than 20.0 wt% and the amount of the binder is less than 80.0 wt% based on the sum of the weights of the second conductive material and the binder, it is not preferable in that adhesion may be degraded, and due to the degradation in the dispersibility of the second conductive material and the occurrence of agglomeration, binding force to the binder is degraded, so that tensile strength may not be improved. Specifically, the second conductive material and the binder may be included in the negative electrode active material layer at a weight ratio of 1.5:99.5 to 5.0:95.0, specifically 1.5:98.5 to 5.0:95.0, and when in the above range, it is good in terms of improving the tensile strength of the binder, smoothly maintaining the conductive network smoothly, and improving the lifespan properties of the negative electrode.

The binder may be included in the negative electrode active material layer in an amount of 5 wt% to 20 wt%, preferably 7 wt% to 15 wt%. When in the above range, the problem of the volume expansion of an active material may be minimized by smoothly binding the silicon-based active material, and at the same time, the dispersion of the binder may be facilitated when preparing a slurry for forming a negative electrode active material layer and coating properties and the phase stability of a slurry may be improved.

The thickness of the negative electrode active material layer may be 10 µm to 100 µm, preferably 20 µm to 50 µm. In the present specification, the thickness of the negative electrode active material layer may be the thickness of one negative electrode active material layer formed on one surface of a negative electrode current collector.

### <Secondary battery>

The present invention provide a secondary battery, specifically a lithium secondary battery. Specifically, the secondary battery may include the above-described negative electrode.

Specifically, the secondary battery may include a negative electrode, a positive electrode opposing the negative electrode, a separator interposed between the negative electrode and the positive electrode, and an electrolyte. The negative electrode may be the above-described negative electrode.

The positive electrode may include a positive electrode current collector, and a positive electrode active material layer disposed on the positive electrode current collector.

The positive electrode current collector is not particularly limited as long as it has conductivity without causing a chemical change in the battery. Specifically, copper, stainless steel, aluminum, nickel, titanium, fired carbon, copper or stainless steel that is surface-treated with one of carbon, nickel, titanium, silver, and the like, an aluminum-cadmium alloy, and the like may be used as the positive electrode current collector.

The positive electrode current collector may typically have a thickness of 3 µm to 500 µm.

The positive electrode current collector may have microscopic irregularities formed on the surface thereof to improve the adhesion of the positive electrode active material. For example, the positive electrode current collector may be used in various forms such as a film, a sheet, a foil, a net, a porous body, a foam, and a non-woven body.

The positive electrode active material layer may be disposed on at least one surface of the positive electrode current collector, and specifically, may be disposed on one surface or both surfaces of the positive electrode current collector.

The positive electrode active material layer may include a positive electrode active material.

The positive electrode active material is a compound capable of reversible intercalation and de-intercalation of lithium, and specifically, may include a lithium transition metal composite oxide including at least one transition metal selected from the group consisting of nickel, cobalt, manganese, and aluminum, and lithium, preferably a lithium transition metal composite oxide including a transition metal containing nickel, cobalt, or manganese, and lithium.

More specifically, the lithium transition metal composite oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (wherein 0<Y<1), LiMn_{2-Z}Ni_{Z}O₄ (wherein 0 < Z < 2), etc.), a lithium-nickel-cobalt-based oxide (e.g., LiNi_{1-Y1}Co_{Y1}O₂ (wherein 0<Y1<1), etc.), a lithium-manganese-cobalt-based oxide (e.g., LiCo_{1-Y2}Mn_{Y2}O₂ (wherein 0<Y2<1), LiMn_{2-Z1}Co_{Z1}O₄ (wherein 0<Z1<2, etc.), a lithium-nickel-manganese-cobalt-based oxide (e.g., Li(NiₚCo_{q}Mnᵣ₁)O₂ (wherein 0<p<1, 0<q<1, 0<r1<1, p+q+r1=1) or Li(Niₚ₁Co_{q1}Mnᵣ₂)O₄ (wherein 0<p1<2, 0<q1<2, 0<r2<2, p1+q1+r2=2, etc.), or a lithium-nickel-cobalt-transition metal (M) oxide (e.g., Li(Niₚ₂Co_{q2}Mnᵣ₃Mₛ₂)O₂ (wherein M is selected from the group consisting of Al, Fe, V, Cr, Ti, Ta, Mg, and Mo, and p2, q2, r3, and s2 are each an atomic fraction of independent elements, and 0<p2<1, 0<q2<1, 0<r3<1, 0<s2< 1, p2+q2+r3+s2=1, etc.) and the like, and any one thereof or two or more of these compounds may be included. Among these, in terms of being able to increase the capacity and stability of a battery, the lithium transition metal composite oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.), and the like. When considering an remarkable improvement effect according to the control of type and content ratio of constituent elements forming a lithium transition metal composite oxide, the lithium transition metal composite oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and the like, and any one thereof or a mixture of two or more thereof may be used.

The positive electrode active material may be included in the positive electrode active material layer in an amount of 80 wt% to 99 wt%, preferably 92 wt% to 98.5 wt% in consideration of exerting sufficient capacity of the positive electrode active material.

The positive electrode active material layer may further include a binder and/or a conductive material in addition to the positive electrode active material described above.

The binder is a component for assisting in binding of an active material, a conductive material, and the like, and binding to a current collector, and specifically, may include at least one selected from the group consisting of polyvinylidenefluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, preferably polyvinylidenefluoride.

The binder may be included in the positive electrode active material layer in an amount of 1 wt% to 20 wt%, preferably 1.2 wt% to 10 wt% in terms of securing sufficient binding force between components such as a positive electrode active material.

The conductive material may be used to assist and improve conductivity in the secondary battery, and is not particularly limited as long as it has conductivity without causing a chemical change. Specifically, the conductive material may include graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; and a polyphenylene derivative, and may preferably include carbon black in terms of improving conductivity.

In terms of facilitating the dispersion of the conductive material when preparing a slurry for forming a positive electrode active material layer and further improving electrical conductivity, the specific surface area of the conductive material may be 80 m²/g to 200 m²/g, preferably 100 m²/g to 150 m²/g.

In terms of securing sufficient electrical conductivity, the conductive material may be included in the positive electrode active material layer in an amount of 1 wt% to 20 wt%, preferably 1.2 wt% to 10 wt%.

The thickness of the positive electrode active material layer may be 30 µm to 400 µm, preferably 50 µm to 110 µm.

The positive electrode may be manufactured by coating a positive electrode slurry including a positive electrode active material, and selectively, a binder, a conductive material, and a solvent for forming a positive electrode slurry on the positive electrode current collector, followed by drying and roll-pressing.

The solvent for forming a positive electrode slurry may include an organic solvent such as N-methyl-2-pyrrolidone (NMP), and may be used in an amount such that a preferred viscosity is achieved when the positive electrode active material, and selectively, the binder, the conductive material, and the like are included. For example, the solvent for forming a positive electrode slurry may be included in the positive electrode slurry in an amount such that the concentration of a solid including the positive electrode active material, and selectively, the binder and the conductive material is 50 wt% to 95 wt%, preferably 70 wt% to 90 wt%.

The porosity of the positive electrode active material layer may be 20% to 35%.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may selectively be used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the secondary battery of the present invention, the N/P ratio calculated by Equation 1 below may be 1.5 to 2.5, preferably 1.7 to 2. N/P ratio = {(Discharge capacity per unit area of the negative electrode)/(Discharge capacity per unit area of the positive electrode)}

When in the above range, the high capacity and fast charging properties of a silicon-based active material may be exhibited, and also, the influence of volume expansion/contraction of the silicon-based active material on the battery may be minimized, so that the lifespan properties of the secondary battery may be further improved.

Specifically, the discharge capacity per unit area of the negative electrode may be obtained by the following method. First, a negative electrode sample which is identical to the negative electrode used is prepared. A coin-type half-cell including the negative electrode sample, a lithium metal counter electrode opposing the negative electrode, a separator interposed between the negative electrode and the lithium metal counter electrode, and an electrolyte is prepared, and the discharge capacity of the half-cell is obtained. The discharge capacity per unit area of the negative electrode may be obtained by dividing the discharge capacity by the area of the negative electrode sample .

In addition, the discharge capacity per unit area of the positive electrode may be obtained by the following method. First, a positive electrode sample which is identical to the positive electrode used is prepared. A coin-type half-cell including the positive electrode sample, a lithium metal counter electrode opposing the positive electrode, a separator interposed between the negative electrode and the lithium metal counter electrode, and an electrolyte is prepared, and the discharge capacity of the half-cell is obtained. The discharge capacity per unit area of the positive electrode may be obtained by dividing the discharge capacity by the area of the positive electrode sample .

According to a typical method for manufacturing a secondary battery, the secondary battery may be manufactured by interposing a separator between the negative electrode and the positive electrode described above, and then injecting an electrolyte solution thereto.

The secondary battery according to the present invention is useful for portable devices such as a mobile phone, a notebook computer, and a digital camera, and in the field of electric vehicles such as a hybrid electric vehicle (HEV), and in particular, may be preferably used as a component battery for a medium-to-large-sized battery module. Therefore, the present invention also provides a medium-to-large-sized battery module including the secondary battery as described above as a unit cell.

A medium-to-large-sized battery module as described above may be preferably applied to a power source which requires high output and large capacity, such as an electric vehicle, a hybrid electric vehicle, and a power storage device.

Hereinafter, embodiments of the present invention will be described in detail so that those skilled in the art may easily carry out the present invention. However, the present invention may be embodied in many different forms, and is not limited to the embodiments set forth herein.

### Examples

### <Manufacturing of negative electrode>

### Example 1: Manufacturing of negative electrode

Si as a silicon-based active material (average particle diameter (D₅₀) : 2.3 µm), a first conductive material, a second conductive material, and a binder were mixed at 70.0:19.8:0.2:10.0, and the mixture was added to distilled water, which is a solvent for forming a negative electrode slurry to prepare a negative electrode slurry (solid content concentration: 25 wt%).

The first conductive material was plate-shaped graphite (specific surface area: 17.0 m²/g, average particle diameter (D₅₀): 3.5 µm, specific surface area: 4.0), and the second conductive material was a single-walled carbon nanotube aggregate (specific surface area: 1,100 m²/g, diameter: 1.5 nm, length: 10 to 15 µm, aspect ratio: 6,667 to 10,000).

As the binder, a mixture prepared by mixing carboxymethyl cellulose (CMC) (weight average molecular weight: 1,260,000) and styrene-butadiene rubber (SBR) at a weight ratio of 10:90 was used.

The negative electrode slurry was coated on both sides of a copper current collector (thickness: 8 µm) as a negative electrode current collector with a loading amount of 100 mg/25 cm², roll-pressed, and then dried in a vacuum oven at 130°C for 10 hours to form a negative electrode active material layer (thickness: 25 µm), which was used as a negative electrode (thickness of the negative electrode: 58 µm).

### Example 2: Manufacturing of negative electrode

A negative electrode was manufactured in the same manner as in Example 1 except that a mixture prepared by mixing carboxymethyl cellulose and styrene-butadiene rubber at a weight ratio of 30:70 was used as the binder.

### Example 3: Manufacturing of negative electrode

A negative electrode was manufactured in the same manner as in Example 1 except that a mixture prepared by mixing carboxymethyl cellulose and styrene-butadiene rubber at a weight ratio of 60:40 was used as the binder.

### Comparative Example 1: Manufacturing of negative electrode

A negative electrode was manufactured in the same manner as in Example 1 except that a copolymer of polyvinyl alcohol and polyacrylic acid (the copolymer in which a vinyl alcohol monomer and acrylic acid monomer were mixed at a weight ratio of 66:34 and polymerized) was used as the binder, a mixture prepared by mixing carbon black (specific surface area: 63 m²/g, average particle diameter (D₅₀) : 35 nm, aspect ratio: 1.0), the first conductive material, and the second conductive material at a weight ratio of 10.0:9.8:0.2 was used as a conductive material, and the silicon-based active material, the conductive material, and the binder were mixed at a weight ratio of 70:20:10.

### Comparative Example 2: Manufacturing of negative electrode

A negative electrode was manufactured in the same manner as in Example 1 except that a mixture prepared by mixing carbon black (specific surface area: 63 m²/g, average particle diameter (D₅₀) : 35 nm, aspect ratio: 1.0), the first conductive material, and the second conductive material at a weight ratio of 10.0:9.8:0.2 was used as a conductive material, and the silicon-based active material, the conductive material, and the binder were mixed at a weight ratio of 70:20:10.

### Comparative Example 3: Manufacturing of negative electrode

A negative electrode was manufactured in the same manner as in Example 1 except that the silicon-based active material, the first conductive material, the second conductive material, and the binder were mixed at a weight ratio of 80.0:9.8:0.2:10.

### Comparative Example 4: Manufacturing of negative electrode

A negative electrode was manufactured in the same manner as in Example 1 except that the first conductive material was not used, and the silicon-based active material, the second conductive material, and the binder were mixed at a weight ratio of 85:5:10.

### Comparative Example 5: Manufacturing of negative electrode

A negative electrode was manufactured in the same manner as in Example 1 except that the silicon-based active material, the first conductive material, the second conductive material, and the binder were mixed at a weight ratio of 60.0:29.8:0.2:10.0.

### Comparative Example 6: Manufacturing of negative electrode

A negative electrode was manufactured in the same manner as in Example 1 except that Si as the silicon-based active material, the first conductive material, the second conductive material, and the binder were mixed at a weight ratio of 70.1:19.8:0.1:10.0.

### Comparative Example 7: Manufacturing of negative electrode

A negative electrode was manufactured in the same manner as in Example 1 except that Si as the silicon-based active material, the first conductive material, the second conductive material, and the binder were mixed at a weight ratio of 67.2:19.8:3.0:10.0.

**[Table 1]**

| | Silicon-based active material (wt%) | Conductive material (wt%) | | | Biner (wt%) | | |
|---|---|---|---|---|---|---|---|
| | | Plate-shaped graphite (First conductive material) | Single-walled carbon nanotube aggregate (Second conductive material) | Carbon black | CMC | SBR | Copolymer of PVA and PAA |
| Example 1 | 70.0 | 19.8 | 0.2 | - | 1.0 | 9.0 | - |
| Example 2 | 70.0 | 19.8 | 0.2 | - | 3.0 | 7.0 | - |
| Example 3 | 70.0 | 19.8 | 0.2 | - | 6.0 | 4.0 | - |
| Comparative Example 1 | 70.0 | 9.8 | 0.2 | 10 | - | - | 10.0 |
| Comparative Example 2 | 70.0 | 9.8 | 0.2 | 10 | 1.0 | 9.0 | - |
| Comparative Example 3 | 80.0 | 9.8 | 0.2 | - | 1.0 | 9.0 | - |
| Comparative Example 4 | 85.0 | - | 5 | - | 1.0 | 9.0 | - |
| Comparative Example 5 | 60.0 | 29.8 | 0.2 | - | 1.0 | 9.0 | - |
| Comparative Example 6 | 70.1 | 19.8 | 0.1 | - | 1.0 | 9.0 | - |
| Comparative Example 7 | 67.2 | 19.8 | 3 | - | 1.0 | 9.0 | - |

### <Manufacturing of secondary battery>

### 1. Manufacturing of secondary battery

Li[Ni_{0.6}Co_{0.2}Mn_{0.2}]O₂ (Average particle diameter D₅₀: 15 µm) as a positive electrode active material, carbon black (Product name: Super C65, Manufacturer: Timcal) as a conductive material, and polyvinylidenefluoride (PVdF) as a binder were added at a weight ratio of 97.5:1.0:1.5 to N-methyl-2-pyrrolidone (NMP), as a solvent for forming a positive electrode slurry, to prepare a positive electrode slurry (Solid content concentration 72 wt%).

The positive electrode slurry was coated on both sides of an aluminum current collector (Thickness: 15 µm) as a positive electrode current collector with a loading amount of 600 mg/25 cm², roll-pressed, and then dried in a vacuum oven at 130°C for 10 hours to form a positive electrode active material layer (Thickness: 73.5 µm), thereby manufacturing a positive electrode (Thickness of the positive electrode: 162 µm).

A polyethylene separator was interposed between the positive electrode and the negative electrode of Example 1, and an electrolyte was injected thereto to manufacture a secondary battery of Example 1.

The electrolyte was prepared by adding vinylene carbonate in an amount of 3 wt% based on the total weight of the electrolyte, and then adding LiPF₆, as a lithium salt, at a concentration of 1 M, to an organic solvent in which fluoroethylene carbonate (FEC) and diethyl carbonate (DMC) were mixed in a volume ratio of 30:70.

Secondary batteries of Examples 2 to 3 and Comparative Examples 1 to 7 were manufactured in the same manner as in Example 1 except that the negative electrodes of Examples 2 to 3 and Comparative Examples 1 to 7 were respectively used.

### 2. Measurement and calculation of N/P ratio of secondary battery

A negative electrode sample which is identical to the negative electrode of Example 1 was prepared. A coin-type half-cell including the negative electrode sample, a lithium metal counter electrode opposing the negative electrode, a polyethylene separator interposed between the negative electrode and the lithium metal counter electrode, and an electrolyte was manufactured, and the discharge capacity of the half-cell was obtained (unit: mAh/g). The discharge capacity per unit area of the negative electrode of Example 1 was obtained by dividing the discharge capacity by the unit area of the negative electrode sample (unit: mAh/cm²).

In addition, a positive electrode sample which is identical to the positive electrode of Example 1 was prepared. A coin-type half-cell including the positive electrode sample, a lithium metal counter electrode opposing the positive electrode, a polyethylene separator interposed between the positive electrode and the lithium metal counter electrode, and an electrolyte was manufactured, and the discharge capacity of the half-cell was obtained (unit: mAh/g). The discharge capacity per unit area of the positive electrode was obtained by dividing the discharge capacity by the area of the positive electrode sample (unit: mAh/cm²).

Using the following equation, the N/P ratio of the secondary battery of Example 1 was calculated (N/P ratio = 2.00). N/P ratio = {(Discharge capacity per unit area of the negative electrode)/(Discharge capacity per unit area of the positive electrode)}

The N/P ratio of the secondary battery of each of Examples 2 and 3 and Comparative Examples 1 to 7 was calculated in the same manner as in Example 1 except that the negative electrodes of Examples 2 and 3 and Comparative Examples 1 to 7 were respectively used.

The results are shown in Table 2 below.

**[Table 2]**

| | N/P ratio |
|---|---|
| Example 1 | 2.00 |
| Example 2 | 2.02 |
| Example 3 | 1.96 |
| Comparative Example 1 | 2.04 |
| Comparative Example 2 | 2.02 |
| Comparative Example 3 | 2.29 |
| Comparative Example 4 | 2.46 |
| Comparative Example 5 | 2.00 |
| Comparative Example 6 | 2.00 |
| Comparative Example 7 | 1.92 |

### Experimental Examples

### Experimental Example 1: Binder wetting and tensile strength evaluation

### 1. Manufacturing of binder film

Binder films of Examples 1A to 3A and Comparative Examples 1A to 7A were manufactured to evaluate the wetting of an electrolyte solution.

### Example 1A

A binder film of Example 1A including the conductive material and the binder used in Example 1 at the same weight ratio as in Example 1 was manufactured.

A method for manufacturing the binder film is as follows. A dispersion containing 3 g of the binder used in Example 1 was prepared. A solution was prepared in which the conductive material used in Example 1 was added to the dispersion according to the weight ratio of Example 1. The solution was stirred at 2,500 rpm for 1 hour using a high-speed stirrer. The stirred solution was put into a rectangular parallelepiped bowl coated with Teflon on the inner surface thereof and having an area of 10 cm × 15 cm and a height of 3 cm, and then naturally dried in a hood to manufacture the binder film.

### Example 2A

A binder film of Example 2A including the conductive material and the binder used in Example 2 at the same weight ratio as in Example 2 was manufactured. The binder film was manufactured in the same manner as in Example 1A except that the conductive material and binder used in Example 2 were used at the same weight ratio as in Example 2 instead of the conductive material and binder used in Example 1.

### Example 3A

A binder film of Example 3A including the conductive material and the binder used in Example 3 at the same weight ratio as in Example 3 was manufactured. The binder film was manufactured in the same manner as in Example 1A except that the conductive material and binder used in Example 3 were used at the same weight ratio as in Example 3 instead of the conductive material and binder used in Example 1.

### Comparative Example 1A

A binder film of Comparative Example 1A including the conductive material and the binder used in Comparative Example 1 at the same weight ratio as in Comparative Example 1 was manufactured. The binder film was manufactured in the same manner as in Example 1A except that the conductive material and binder used in Comparative Example 1 were used at the same weight ratio as in Comparative Example 1 instead of the conductive material and binder used in Example 1.

### Comparative Example 2A

A binder film of Comparative Example 2A including the conductive material and the binder used in Comparative Example 2 at the same weight ratio as in Comparative Example 2 was manufactured. The binder film was manufactured in the same manner as in Example 1A except that the conductive material and binder used in Comparative Example 2 were used at the same weight ratio as in Comparative Example 2 instead of the conductive material and binder used in Example 1.

### Comparative Example 3A

A binder film of Comparative Example 3A including the conductive material and the binder used in Comparative Example 3 at the same weight ratio as in Comparative Example 3 was manufactured. The binder film was manufactured in the same manner as in Example 1A except that the conductive material and binder used in Comparative Example 3 were used at the same weight ratio as in Comparative Example 3 instead of the conductive material and binder used in Example 1.

### Comparative Example 4A

A binder film of Comparative Example 4A including the conductive material and the binder used in Comparative Example 4 at the same weight ratio as in Comparative Example 4 was manufactured. The binder film was manufactured in the same manner as in Example 1A except that the conductive material and binder used in Comparative Example 4 were used at the same weight ratio as in Comparative Example 4 instead of the conductive material and binder used in Example 1.

### Comparative Example 5A

A binder film of Comparative Example 5A including the conductive material and the binder used in Comparative Example 5 at the same weight ratio as in Comparative Example 5 was manufactured. The binder film was manufactured in the same manner as in Example 1A except that the conductive material and binder used in Comparative Example 5 were used at the same weight ratio as in Comparative Example 5 instead of the conductive material and binder used in Example 1.

### Comparative Example 6A

A binder film of Comparative Example 6A including the conductive material and the binder used in Comparative Example 6 at the same weight ratio as in Comparative Example 6 was manufactured. The binder film was manufactured in the same manner as in Example 1A except that the conductive material and binder used in Comparative Example 6 were used at the same weight ratio as in Comparative Example 6 instead of the conductive material and binder used in Example 1.

### Comparative Example 7A

A binder film of Comparative Example 7A including the conductive material and the binder used in Comparative Example 7 at the same weight ratio as in Comparative Example 7 was manufactured. The binder film was manufactured in the same manner as in Example 1A except that the conductive material and binder used in Comparative Example 7 were used at the same weight ratio as in Comparative Example 7 instead of the conductive material and binder used in Example 1.

### (2) Electrolyte solution wetting evaluation

The binder films manufactured in Examples 1A to 3A and Comparative Examples 1A to 7A were placed in an electrolyte solution at 60°C for 24 hours, and then the electrolyte solution wetting each thereof was evaluated through the following equation, and the results are shown in Table 3 below.

### Electrolyte solution wetting(%) = M/M₀ × 100

(In the above equation, M is the weight of the binder film taken out of the electrolyte solution after being placed therein, and M₀ is the weight of the binder film before being placed in the electrolyte solution.)

### (3) Tensile strength evaluation

The binder film manufactured in each of Examples 1A to 3A and Comparative Examples 1A to 7A was punched to a rectangular parallelepiped shape with a horizontal length of 6.5 cm and a vertical length of 1.5 cm. The punched binder film was bonded to a universal testing machine (UTM), and then a tensile test was performed in the transverse direction to define the tensile strength (unit: MPa) measured just before breakage as the tensile strength of the binder film.

The tensile strength of each the binder film is shown in Table 3 below.

**[Table 3]**

| | Electrolyte wetting (%) | Tensile strength of binder film (MPa) |
|---|---|---|
| Example 1 | 14.2 | 33.5 |
| Example 2 | 10.8 | 62.2 |
| Example 3 | 7.0 | 110.1 |
| Comparative Example 1 | 0.11 | 3.2 |
| Comparative Example 2 | 14.5 | 4.0 |
| Comparative Example 3 | 14.3 | 27.7 |
| Comparative Example 4 | 15.2 | 18.1 |
| Comparative Example 5 | 15.6 | 25.4 |
| Comparative Example 6 | 13.8 | 16.7 |
| Comparative Example 7 | 16.4 | 23.5 |

Referring to Table 3, the binder films of Examples 1A to 3A were evaluated to have excellent electrolyte solution wetting and high tensile strength. This is thought to be due to the fact that the second conductive material acts as a filler in the binder having excellent electrolyte solution wetting, thereby improving tensile strength. Therefore, it can be expected that the output properties and lifespan properties of the negative electrodes of Examples 1 to 3 may be simultaneously improved.

However, in the case of Comparative Example 1A, both electrolyte solution wetting and tensile strength were evaluated to be poor. Meanwhile, the binder films of Comparative Example 2A to Comparative Example 7A were evaluated to have somewhat excellent electrolyte solution wetting but low tensile strength. That is, it can be expected that the output properties of the negative electrodes used in Comparative Example 1 to Comparative Example 7 may be poor and the capacity thereof may not be implemented well in cycle charging and discharging.

### Experimental Example 2: Output evaluation

The discharge output properties of the secondary batteries of Examples 1 to 3 and Comparative Examples 1 to 7 manufactured above were evaluated.

The secondary batteries were subjected to one cycle of charging/discharging under the charging (1.0 C CC/CV charge 4.2 V 0.05 C cut) and discharging (0.5 C CC discharge 3.2 V cut) conditions, and the discharge capacity thereof was measured. The results are shown in Table 4.

**[Table 4]**

| | Discharge capacity (mAh) |
|---|---|
| Example 1 | 4.27 |
| Example 2 | 4.11 |
| Example 3 | 4.00 |
| Comparative Example 1 | 3.76 |
| Comparative Example 2 | 3.51 |
| Comparative Example 3 | 2.88 |
| Comparative Example 4 | 2.57 |
| Comparative Example 5 | 3.44 |
| Comparative Example 6 | 3.12 |
| Comparative Example 7 | 2.35 |

Referring to Table 4, it can be confirmed that in the case of the secondary batteries of Examples 1 to 3 in which the content of the first conductive material and the content of the second conductive material, and the ratio of the second conductive material and the binder were adjusted to desired levels, the conductive network in the negative electrode was smoothly maintained, and the wetting and tensile strength of the binder were secured, thereby exhibiting an excellent initial discharge capacity compared to those of Comparative Examples 1 to 7.

### Experimental Example 3: Cycle cumulative capacity evaluation

The cycle cumulative capacity of the secondary battery of each of Examples 1 to 3 and Comparative Examples 1 to 7 manufactured above was evaluated.

The secondary batteries were subjected to 200 cycles of charging/discharging under the charging (1.0 C CC/CV charge 4.2 V 0.05 C cut) and discharging (0.5 C CC discharge 3.2 V cut) conditions, and the discharge capacity thereof for each cycle was measured and then summed. The results are shown in Table 5.

**[Table 5]**

| | Cumulative capacity (mAh) |
|---|---|
| Example 1 | 691 |
| Example 2 | 697 |
| Example 3 | 632 |
| Comparative Example 1 | 527 |
| Comparative Example 2 | 407 |
| Comparative Example 3 | 412 |
| Comparative Example 4 | 421 |
| Comparative Example 5 | 515 |
| Comparative Example 6 | 489 |
| Comparative Example 7 | 459 |

Referring to Table 5, it can be confirmed that in the case of the secondary batteries of Examples 1 to 3 in which the content of the first conductive material and the content of the second conductive material, and the ratio of the second conductive material and the binder were adjusted to desired levels, the conductive network in the negative electrode was smoothly maintained, and the wetting and tensile strength of the binder were secured, thereby implementing the capacity of negative electrodes and the secondary batteries including the silicon-based active material at an excellent level during cycle charging and discharging compared to those of Comparative Examples 1 to 7.

## Claims

1. A negative electrode comprising:
a negative electrode current collector; and
a negative electrode active material layer disposed on the negative electrode current collector, wherein the negative electrode active material layer includes a silicon-based active material, a first conductive material including graphite, a second conductive material including a single-walled carbon nanotube, and a binder, wherein:
the binder includes a cellulose-based compound and a rubber-based compound;
the first conductive material is included in the negative electrode active material layer in an amount of 15 wt% to 25 wt%;
the second conductive material is included in the negative electrode active material layer in an amount of 0.15 wt% to 2.5 wt%; and
the second conductive material and the binder are included in the negative electrode active material layer at a weight ratio of 1.5:99.5 to 20.0:80.0.

2. The negative electrode claim 1, wherein the graphite is plate-shaped.

3. The negative electrode claim 1, wherein a specific surface area of the first conductive material is 5 m²/g to 40 m²/g, measured as specified in paragraph [0039].

4. The negative electrode claim 1, wherein the average particle diameter (D₅₀) of the first conductive material is 1 µm to 20 µm, measured as specified in paragraph [0018].

5. The negative electrode claim 1, wherein the aspect ratio of the first conductive material is 1.1 to 30.0.

6. The negative electrode claim 1, wherein the specific surface area of the second conductive material is 400 m²/g to 1,500 m2/g, measured as specified in paragraph [0039].

7. The negative electrode claim 1, wherein the second conductive material has an average length of 5 µm to 30 µm.

8. The negative electrode claim 1, wherein an aspect ratio of the second conductive material is 5,000 to 15,000.

9. The negative electrode claim 1, wherein the first conductive material and the second conductive material are included in the negative electrode active material layer at a weight ratio of 0.7:99.3 to 1.5:99.5.

10. The negative electrode claim 1, wherein the silicon-based active material is included in the negative electrode active material layer in an amount of 60 wt% to 78 wt%.

11. The negative electrode claim 1, wherein the binder comprises the cellulose-based compound and the rubber-based compound at a weight ratio of 5:95 to 80:20.

12. The negative electrode claim 1, wherein the cellulose-based compound comprises at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

13. The negative electrode claim 1, wherein the rubber-based compound comprises at least one selected from the group consisting of styrene-butadiene rubber, acrylic rubber, butyl rubber, and fluoro rubber.

14. The negative electrode claim 1, wherein the binder is included in the negative electrode active material layer in an amount of 5 wt% to 20 wt%.

15. A secondary battery comprising:
the negative electrode according to claim 1;
a positive electrode opposing the negative electrode;
a separator interposed between the positive electrode and the negative electrode; and
an electrolyte.

## Patentansprüche

1. Negative Elektrode, umfassend:
einen Negativelektroden-Stromabnehmer; und
eine Negativelektroden-Aktivmaterialschicht, die auf dem Negativelektroden-Stromabnehmer angeordnet ist, worin die Negativelektroden-Aktivmaterialschicht ein Aktivmaterial auf Siliciumbasis, ein erstes leitfähiges Material, das Graphit umfasst, ein zweites leitfähiges Material, das ein einwandiges Kohlenstoffnanoröhrchen umfasst, und ein Bindemittel umfasst, worin:
das Bindemittel eine Verbindung auf Zellulosebasis und eine Verbindung auf Kautschukbasis umfasst;
das erste leitfähige Material in der Negativelektroden-Aktivmaterialschicht in einer Menge von 15 Gew.-% bis 25 Gew.-% enthalten ist;
das zweite leitfähige Material in der Negativelektroden-Aktivmaterialschicht in einer Menge von 0,15 Gew.-% bis 2,5 Gew.-% enthalten ist; und
das zweite leitfähige Material und das Bindemittel in der Negativelektroden-Aktivmaterialschicht in einem Gewichtsverhältnis von 1,5:99,5 bis 20,0:80,0 enthalten sind.

2. Negative Elektrode gemäß Anspruch 1, worin das Graphit plattenförmig ist.

3. Negative Elektrode gemäß Anspruch 1, worin die spezifische Oberfläche des ersten leitfähigen Materials 5 m²/g bis 40 m²/g beträgt, gemessen wie in Absatz [0039] beschrieben.

4. Negative Elektrode gemäß Anspruch 1, worin der mittlere Partikeldurchmesser (D₅₀) des ersten leitfähigen Materials 1 µm bis 20 µm beträgt, gemessen wie in Absatz [0018] beschrieben.

5. Negative Elektrode gemäß Anspruch 1, worin das Seitenverhältnis des ersten leitfähigen Materials 1,1 bis 30,0 beträgt.

6. Negative Elektrode gemäß Anspruch 1, worin die spezifische Oberfläche des zweiten leitfähigen Materials 400 m²/g bis 1.500 m²/g beträgt, gemessen wie in Absatz [0039] angegeben.

7. Negative Elektrode gemäß Anspruch 1, worin das zweite leitfähige Material eine mittlere Länge von 5 µm bis 30 µm aufweist.

8. Negative Elektrode gemäß Anspruch 1, worin ein Seitenverhältnis des zweiten leitfähigen Materials 5.000 bis 15.000 beträgt.

9. Negative Elektrode gemäß Anspruch 1, worin das erste leitfähige Material und das zweite leitfähige Material in der Negativelektroden-Aktivmaterialschicht in einem Gewichtsverhältnis von 0,7:99,3 bis 1,5:99,5 enthalten sind.

10. Negative Elektrode gemäß Anspruch 1, worin das Aktivmaterial auf Siliciumbasis in der Negativelektroden-Aktivmaterialschicht in einer Menge von 60 Gew.-% bis 78 Gew.-% enthalten ist.

11. Negative Elektrode gemäß Anspruch 1, worin das Bindemittel die Verbindung auf Cellulosebasis und die Verbindung auf Kautschukbasis in einem Gewichtsverhältnis von 5:95 bis 80:20 enthält.

12. Negative Elektrode gemäß Anspruch 1, worin die Verbindung auf Cellulosebasis zumindest eine umfasst, ausgewählt aus der Gruppe bestehend aus Carboxymethylcellulose, Methylcellulose, Hydroxypropylcellulose, Methylhydroxypropylcellulose, Ethylhydroxyethylcellulose, Methylethylhydroxyethylcellulose und Cellulose-Gummi.

13. Negative Elektrode gemäß Anspruch 1, worin die Verbindung auf Kautschukbasis zumindest eine umfasst, die ausgewählt ist aus der Gruppe bestehend aus Styrol-Butadienkautschuk, Acrylkautschuk, Butylkautschuk und Fluorkautschuk.

14. Negative Elektrode gemäß Anspruch 1, worin das Bindemittel in der Negativelektroden-Aktivmaterialschicht in einer Menge von 5 Gew.-% bis 20 Gew.-% enthalten ist.

15. Sekundärbatterie, umfassend:
die negative Elektrode gemäß Anspruch 1;
eine positive Elektrode, die der negativen Elektrode gegenüberliegt;
einen zwischen der positiven Elektrode und der negativen Elektrode angeordneten Separator; und
einen Elektrolyten.

## Revendications

1. Électrode négative comprenant :
un collecteur de courant d'électrode négative ; et
une couche de matériau actif d'électrode négative disposée sur le collecteur de courant d'électrode négative, dans laquelle la couche de matériau actif d'électrode négative inclut un matériau actif à base de silicium, un premier matériau conducteur incluant du graphite, un second matériau conducteur incluant un nanotube de carbone à paroi unique, et un liant, dans laquelle :
le liant inclut un composé à base de cellulose et un composé à base de caoutchouc ;
le premier matériau conducteur est inclus dans la couche de matériau actif d'électrode négative dans une quantité de 15 % en poids à 25 % en poids ;
le second matériau conducteur est inclus dans la couche de matériau actif d'électrode négative dans une quantité de 0,15 % en poids à 2,5 % en poids ; et
le second matériau conducteur et le liant sont inclus dans la couche de matériau actif d'électrode négative à un rapport de poids de 1,5:99,5 à 20,0:80,0.

2. Électrode négative selon la revendication 1, dans laquelle le graphite a la forme d'une plaque.

3. Électrode négative selon la revendication 1, dans laquelle une surface spécifique du premier matériau conducteur est de 5 m²/g à 40 m²/g, mesurée comme indiqué au paragraphe [0039].

4. Électrode négative selon la revendication 1, dans laquelle le diamètre moyen des particules (D₅₀) du premier matériau conducteur est 1 µm à 20 µm, mesuré comme indiqué au paragraphe [0018].

5. Électrode négative selon la revendication 1, dans laquelle le rapport d'aspect du premier matériau conducteur est 1,1 à 30,0.

6. Électrode négative selon la revendication 1, dans laquelle la surface spécifique du second matériau conducteur est 400 m²/g à 1500 m2/g, mesurée comme indiqué au paragraphe [0039].

7. Électrode négative selon la revendication 1, dans laquelle le second matériau conducteur présente une longueur moyenne de 5 µm à 30 µm.

8. Électrode négative selon la revendication 1, dans laquelle un rapport d'aspect du second matériau conducteur est 5000 à 15 000.

9. Électrode négative selon la revendication 1, dans laquelle le premier matériau conducteur et le second matériau conducteur sont inclus dans la couche de matériau actif d'électrode négative à un rapport de poids de 0,7:99,3 à 1,5:99,5.

10. Électrode négative selon la revendication 1, dans laquelle le matériau actif à base de silicium est inclus dans la couche de matériau actif d'électrode négative dans une quantité de 60 % en poids à 78 % en poids.

11. Électrode négative selon la revendication 1, dans laquelle le liant comprend le composé à base de cellulose et le composé à base de caoutchouc à un rapport de poids de 5:95 à 80:20.

12. Électrode négative selon la revendication 1, dans laquelle le composé à base de cellulose comprend au moins un élément sélectionné parmi le groupe constitué par la carboxyméthylcellulose, la méthylcellulose, l'hydroxypropylcellulose, la méthyl-hydroxypropylcellulose, l'éthylhydroxyéthylcellulose, la méthyléthylhydroxyéthyl-cellulose, et la gomme de cellulose.

13. Électrode négative selon la revendication 1, dans laquelle le composé à base de caoutchouc comprend au moins un élément sélectionné parmi le groupe constitué par le caoutchouc styrène-butadiène, le caoutchouc acrylique, le caoutchouc butyle, et le caoutchouc fluoré.

14. Électrode négative selon la revendication 1, dans laquelle le liant est inclus dans la couche de matériau actif d'électrode négative dans une quantité de 5 % en poids à 20 % en poids.

15. Batterie secondaire comprenant :
l'électrode négative selon la revendication 1 ;
une électrode positive opposée à l'électrode négative ;
un séparateur interposé entre l'électrode positive et l'électrode négative ; et
un électrolyte.
